Europäisches Patentamt

European Patent Office

Office européen des brevets

(11) Publication number: **0 177 235**
**B1**

(12) **EUROPEAN PATENT SPECIFICATION**

(45) Date of publication of patent specification: **14.12.88**

(21) Application number: **85306723.9**

(22) Date of filing: **20.09.85**

(51) Int. Cl.⁴: **H 04 N 5/92, H 04 N 5/782**

(54) Apparatus for recording audio and video signals.

(30) Priority: **05.10.84 JP 209457/84**

(43) Date of publication of application:
**09.04.86 Bulletin 86/15**

(45) Publication of the grant of the patent:
**14.12.88 Bulletin 88/50**

(84) Designated Contracting States:
**AT DE FR GB NL**

(56) References cited:
**DE-A-3 122 754**
**DE-A-3 206 449**
**DE-A-3 245 436**

(73) Proprietor: **SONY CORPORATION**
**7-35 Kitashinagawa 6-Chome Shinagawa-ku**
**Tokyo 141 (JP)**

(72) Inventor: **Fukuda, Tokuya Patents Division**
**Sony Corporation 6-7-35 Kitashinagawa**
**Shinagawa-ku Tokyo 141 (JP)**
Inventor: **Sekine, Masato Patents Division**
**Sony Corporation 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

Courier Press, Leamington Spa, England.

EP 0 177 235 B1

## Description

This invention relates to apparatus for recording audio and video signals and, more particularly, to an apparatus for recording a frequency-modulated (FM) audio signal, together with a video signal, in oblique tracks arranged successively on a magnetic tape, by a rotary magnetic head device.

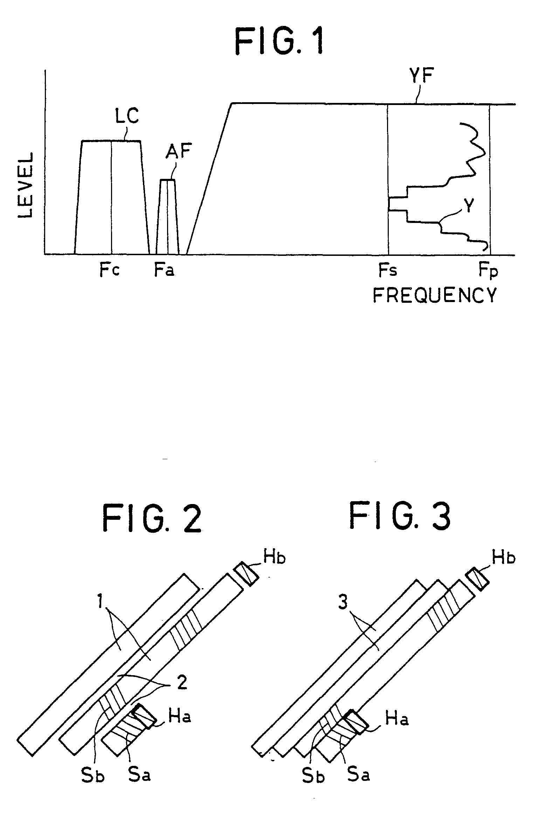

There has been proposed a compact video tape recorder (VTR) used with a magnetic tape having a width of eight millimeters. In such a compact VTR, when recording a colour television signal on the magnetic tape, an FM audio signal which is produced by frequency-modulating a carrier by an audio signal is mixed with a processed colour video signal, which is composed of an FM luminance signal produced by frequency-modulating an appropriate carrier by a luminance signal separated from the colour television signal, and a chrominance signal also separated from the colour television signal and frequency-converted to have a frequency band lower than the frequency band of the FM luminance signal, and recorded, together with the processed colour video signal, in oblique tracks on the magnetic tape by a rotary magnetic head device. The frequency-spectra of the mixed signals to be recorded in the oblique tracks on the magnetic tape are shown in Figure 1 of the accompanying drawings. In the frequency-spectra shown in Figure 1 with the axis of the abscissae representing the frequency and the axis of the ordinates representing the level, an FM audio signal AF is arranged so as to appear in the relatively narrow space between the upper boundary portion of the frequency band of a frequency-converted chorminance signal LC and the lower boundary portion of the frequency band of an FM luminance signal YF extending in its lower side band. A carrier frequency Fa of the FM audio signal AF is selected to be, for example, 1.5 MHz. The frequency-converted chrominance signal LC is formed to have a colour sub-carrier frequency Fc of, for example, about 743 kHz, and the FM luminance signal YF is formed to have the frequency deviation range obtained by a frequency-modulation such that the leading edge of the synchronous signal portion of a luminance signal Y separated from the colour television signal corresponds to a frequency Fs of, for example, 4.2 MHz, while the white peak (the maximum amplitude) of the luminance signal Y corresponds to a frequency Fp of, for example, 5.4 MHz.

For recording of the FM audio signal and the processed colour video signal, two operational modes are selectively used in a compact VTR as mentioned above. In one of these operational modes, which will be referred to as an SP recording mode, as shown in Figure 2 of the accompanying drawings, the speed at which the magnetic tape is transported is set to be relatively high so that oblique tracks 1 are formed on the magnetic tape with spaces or so-called guard bands 2 between each adjacent two thereof. In the other of the operational modes, which will be referred to as an LP recording mode, as shown in Figure 3 of the accompanying drawings, the speed at which the magnetic tape is transported is so restricted that oblique tracks 3 are positioned on the magnetic tape to be immediately adjacent to each other, that is, so that the guard bands between the adjacent oblique tracks 3 are eliminated. In a concrete example, with a pair of rotary magnetic heads Ha and Hb each having a width of 15 microns, the oblique tracks 1, each of which has a width of 15 microns, are formed to be arranged with a pitch of 20.5 microns between each adjacent two thereof in the SP recording mode, and the oblique tracks 3, each of which has a width of 10 microns, are formed to be arranged with a pitch of 10 microns between each adjacent two thereof in the LP recording mode. Accordingly, in a reproduction mode wherein a magnetic tape on which a signal is recorded using the SP recording mode in accordance with the example mentioned above is subjected to reproduction of signals, each of the rotary magnetic heads Ha and Hb having the width of 15 microns scans each of the oblique tracks 1 arranged on the magnetic tape with the pitch of 20.5 microns without overlapping another oblique track 1 adjacent thereto. While in a reproduction mode wherein a magnetic tape on which a signal is recorded using the LP recording mode in accordance with the example mentioned above is subjected to reproduction of signals, each of the rotary magnetic heads Ha and Hb having the width of 15 microns scans each of the oblique tracks 3 arranged on the magnetic tape with the pitch of 10 microns while overlapping another oblique track 3 adjacent thereto.

The rotary magnetic heads Ha and Hb which are used for both recording and reading of signals are provided with different air gap angles (head azimuth angles), so that a substantial azimuth loss is obtained in cross-talk derived from the adjacent oblique tracks for the FM luminance signal read from the magnetic tape, which resides in the relatively high frequency band, even in the reproduction mode wherein the magnetic tape on which a signal is recorded through the LP recording mode is subjected to reproduction of signals, and therefore the cross-talk is minimized in respect of the FM luminance signal read from the magnetic tape. However, the azimuth loss effect is not very effective for cross-talk derived from the adjacent oblique tracks for the frequency-converted chrominance signal read from the magnetic tape, which resides in the relatively low frequency band, so that other measures are taken for minimizing the cross-talk in respect of the frequency-converted chrominance signal read from the magnetic tape. For example, cross talk for the frequency-converted chrominance signal read from the magnetic tape is substantially eliminated by recording the frequency-converted chrominance signal on the magnetic tape with its carrier of constant phase in alternate oblique tracks and with its carrier reversed in phase at every horizontal period in other alternate oblique tracks, and restoring the carrier of a reproduced frequency-converted chrominance signal so as to have a predetermined phase and then making it pass through a pectenated (comb-like) characteristic filter.

Incidentally, in Figures 2 and 3, references Sa and Sb represent horizontal synchronous pulses recorded in the oblique tracks 1 and 3, respectively, by the rotary magnetic heads Ha and Hb with the different head azimuth angles.

Apart from the above described cross-talk in respect of the reproduced frequency-modulated luminance signal and the frequency-converted chrominance signal, the problem of cross-talk also arises in respect of the FM audio signal read from the magnetic tape in the reproduction mode. Particularly, cross-talk from the adjacent oblique tracks for the FM audio signal read from the magnetic tape, which is situated in the relatively low frequency band, are increased in the reproduction mode wherein the magnetic tape on which a signal is recorded in the oblique tracks arranged to be immediately adjacent to each other without the guard bands through the LP recording mode is subjected to reproduction of signals.

For eliminating or minimizing the cross-talk for the reproduced FM audio signal in the reproduction mode wherein the magnetic tape on which a signal is recorded through the LP recording mode is subjected to reproduction of signals, it has been proposed to record the FM audio signal on the magnetic tape with different carrier frequencies in each two adjacent oblique tracks, respectively, as employed in a video tape recorder which is used with a magnetic tape having a width of a half inch and improved to reproduce audio signals with superior quality. However, in the case of such measures, the frequency band of the FM audio signal is expanded with the result that the frequency band of the processed video signal is suppressed. Further, the VTR employing those measures has the disadvantages that the circuit configuration becomes complicated and the cost is increased. Consequently, such measures as proposed above are not suitable for the compact VTR used with the magnetic tape having the width of eight millimeters.

According to the present invention there is provided an apparatus for recording audio and video signals, the apparatus comprising:

signal processing means for producing a frequency-modulated audio signal obtained by frequency-modulating a predetermined carrier in response to an input audio signal supplied thereto and a processed video signal including a frequency-modulated luminance signal having a frequency band thereof arranged on the upper side of the frequency band of said frequency-modulated audio signal; and

magnetic recording means for recording both said frequency-modulated audio signal and said processed video signal in oblique tracks arranged successively on a magnetic tape using an optionally selected one of a first recording mode in which the oblique tracks are formed on the magnetic tape with spaces between each adjacent two thereof and a second recording mode in which the oblique tracks are formed on the magnetic tape to be immediately adjacent to each other; characterized by:

modulation control means for controlling the frequency-modulation carried out by said signal processing means to produce said frequency-modulated audio signal so that said frequency-modulated audio signal is obtained by frequency-modulation with a first modulation index in said first recording mode and with a second modulation index larger than said first modulation index in said second recording mode.

Thus, an embodiment of the invention can provide an apparatus for recording an FM audio signal, together with a video signal, in oblique tracks arranged successively on a magnetic tape, which can take selectively a first recording mode in which the oblique tracks are formed on the magnetic tape with spaces or so-called gaurd bands between each adjacent two thereof and a second recording mode in which the oblique tracks are formed on the magnetic tape to be immediately adjacent to each other without the guard bands, and by which the FM audio signal is recorded in an improved manner in the second recording mode.

Moreover, an embodiment of the invention can provide an apparatus for recording an FM audio signal, together with a video signal, in oblique tracks arranged successively on a magnetic tape, which can record the FM audio signal in the oblique tracks arranged to be immediately adjacent to each other on the magnetic tape, with relatively simplified construction, in such a manner that, in reproducing the signals recorded on the magnetic tape, a cross-talk component contained in a demodulated audio signal which is obtained by frequency-demodulating the FM audio signal read from the magnetic tape is substantially minimized.

It is desired that the FM audio signal be obtained through the frequency-modulation with a relatively small modulation index in both the first and second recording modes because the FM audio signal resulting from the frequency-modulation with the relatively small modulation index only slightly suppresses the frequency band of the processed video signal. However, when the magnetic tape on which the FM audio signal and the processed video signal are recorded in the second recording mode is subjected to reproduction of signals, cross-talk for the FM audio signal read from the magnetic tape appears with a relatively large level, and therefore it is desirable that the FM audio signal resulting from the frequency-modulation with a relatively large modulation index is recorded in the second recording mode so that, in reproducing audio and video signals from the magnetic tape on which the FM audio signal and the processed video signal are recorded by the second recording mode, a cross-talk component contained in a demodulated audio signal, namely, a reproduced audio signal which is obtained by frequency-demodulating the FM audio signal read from the magnetic tape is sufficiently reduced, even though the frequency band of the processed video signal is subjected to a little increased suppression by the FM audio signal.

In view of this, the FM audio signal is produced by frequency-modulation with the second modulation index, which is relatively large, by the signal processing means under the control of the modulation control means and recorded, together with the processed video signal, on the magnetic tape by the magnetic recording means in the second recording mode. In such a case, in addition to a basic arrangement in which the FM audio signal is always produced by frequency-modulation with the second modulation index in the second recording mode, regardless of the frequency of the audio signal by which the predetermined carrier is frequency-modulated for producing the FM audio signal, a specific arrangement in which the FM audio signal is produced by frequency-modulation with the second modulation index only when the frequency of the audio signal is equal to or higher than a predetermined relatively high frequency in the second recording mode, may be used, particularly in order to minimize a cross-talk component contained in high frequency components of a demodulated audio signal which is obtained by frequency-demodulating the FM audio signal read from the magnetic tape in reproducing audio and video signals, which is so conspicuous. The specific arrangement is preferable in view of the advantage that the frequency band of the processed video signal is subjected to reduced suppression by the FM audio signal.

Generally, in reproduction of FM signals from a magnetic tape, assuming that a desired FM signal which is to be read from a certain oblique track is $A\cos\omega_c t$ and cross-talk derived from adjacent oblique tracks is $B\cos\omega t$, a reproduced frequency-modulated signal $f(t)$ is expressed as follows:

$$f(t) = A \cos \omega_c t + B \cos \omega_t$$

$$= A \cos \omega_c t + B \cos (\omega_c + \Delta\omega)t$$

$$= A \cos \omega_c t + B \cos \omega_c t \cdot \cos \Delta\omega t$$

$$- B \sin \omega_c t \cdot \sin\Delta\omega t$$

$$= A\{\cos \omega_c t (1 + B/A \cos\Delta\omega t)$$

$$- B/A \sin \Delta\omega t \cdot \sin\omega_c t\}$$

$$= A\sqrt{(1 + B/A \cos\Delta\omega t)^2 + (B/A \sin\Delta\omega t)^2}$$

$$\times \cos\{\omega_c t + \phi(t)\}$$

where:

$$\Delta\omega = \omega - \omega_c$$

$$\phi(t) = \tan^{-1} \frac{B/A \sin\Delta\omega t}{1 + B/A \cos\Delta\omega t}$$

Accordingly, a demodulation output signal $g(t)$ as an ideal output is expressed as follows:

$$g(t) = d/dt\{\omega_c t = \phi(t)\}$$

$$= \omega_c + \frac{B/A\Delta\omega(\cos\Delta\omega t + B/A)}{1 + 2 B/A \cos\Delta\omega t + (B/A)^2}$$

$$\fallingdotseq \omega_c + B/A \, \Delta\omega\cos\Delta\omega t$$

As apparent from the above equations, it is understood that the demodulation output sign $g(t)$ contains a desired signal $\omega_c$ and a cross-talk component $\Delta\omega$.

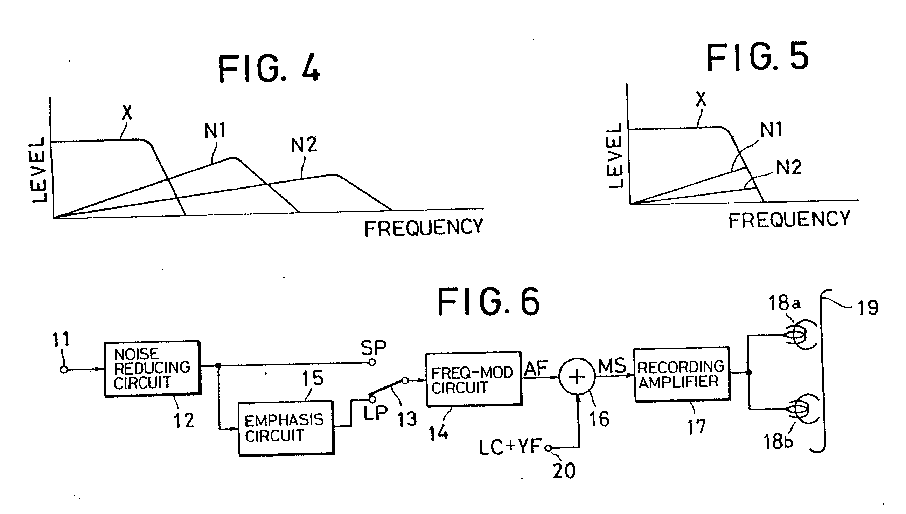

The frequency spectra of the desired signal $\omega_c$ and the cross-talk component $\Delta\omega$ are shown in Figure 4 of the accompanying drawings, in which the level of the desired cross-talk component $\Delta\omega$ appearing in a case where the FM signal produced by the frequency-modulation with a relatively small modulation index is recorded on the magnetic tape (this case will be referred to as a case of small modulation index) is indicated with a curve N1, and the level of the cross-talk component $\Delta\omega$ appearing in a case where the FM signal produced by the frequency-modulation with a relatively large modulation index is recorded on the magnetic tape (this case will be referred to as a case of large modulation index) is indicated with a curve N2. Further, the frequency spectra of filtered output signals obtained from a low-pass filter provided for extracting the desired signal $\omega_c$ from the demodulation output signal $g(t)$ are shown in Figure 5 of the accompanying drawings, in which the curves X, N1 and N2 indicate the same levels as shown in Figure 4.

As apparent from Figures 4 and 5, the cross-talk component $\Delta\omega$ appearing in the case of large modulation index spreads broadly to a high frequency range, compared with the cross-talk component $\Delta\omega$ appearing in the case of small modulation index, with the result that the level of the cross-talk component $\Delta\omega$ appearing in the case of large modulation index at the output of the low-pass filter provided for extcacting the desired signal $\omega_c$ is very low, compared with level of the cross-talk component $\Delta\omega$ appearing in the case of small modulation index at the output of the low-pass filter. Consequently, a signal to noise ratio (S/N) of the desired signal $\omega_c$ obtained at the output of the low-pass filter in the case of large modulation index is improved as compared with that in the case of small modulation index.

In the apparatus so constituted, when the second recording mode in which the oblique tracks are formed on the magnetic tape to be immediately adjacent to each other is taken, the FM audio signal is produced by frequency-modulation with the second modulation index which is relatively large and recorded, together with the processed video signal, in the oblique tracks on the magnetic tape. Accordingly, when the magnetic tape on which the FM audio signal has been recorded, together with the processed video signal, by the second recording mode in such apparatus, is subjected to reproduction of signals, a cross-talk component contained in a demodulated audio signal which is obtained by frequency-demodulating the FM audio signal read from the magnetic tape spreads broadly to a high frequency range, and therefore the level of the cross-talk component in the frequency band of the demodulated audio signal is very low. This means that a reproduced audio signal accompanied by a substantially reduced cross-talk component and having an improved S/N ratio is obtained from the magnetic tape on which the FM audio signal has been recorded, together with the processed video signal, in the oblique tracks formed to be immediately adjacent to each other. Further, in such a case, since the FM audio signal produced by the frequency-modulation with the second modulation index, namely, the relatively large modulation index, is read from the magnetic tape and then frequency-demodulated, other noise incident generally to frequency-modulation and frequency-demodulation is also reduced.

The invention will now be described by way of example with reference to the accompanying drawings, throughout which like parts are referred to by like references, and in which:

Figure 1 is a diagram showing frequency spectra of an FM audio signal, an FM chrominance signal, and a frequency-converted chrominance signal, to which references are made in explaining the recording of audio and colour video signals in oblique tracks on a magnetic tape;

Figures 2 and 3 are diagrams showing arrangements of oblique tracks made on a magnetic tape by rotary magnetic heads;

Figures 4 and 5 are diagrams showing frequency spectra of a signal reproduced by frequency-demodulating an FM signal read from a magnetic tape and cross-talk components, to which references are made in explaining the relation between the modulation index for the FM signal and the level of the cross-talk components;

Figure 6 is a block diagram showing part of one embodiment of apparatus for recording audio and video signals and according to the present invention;

Figure 7 is a block diagram showing an example of apparatus for reproducing audio and video signals from a magnetic tape on which the audio and video signals are recorded by the embodiment shown in Figure 6;

Figure 8 is a diagram showing the characteristic of one example of an emphasis circuit used in the embodiment shown in Figure 6;

Figure 9 is a block diagram showing the configuration of another example of the emphasis circuit used in the embodiment shown in Figure 6;

Figure 10 is a diagram showing the characteristic of the emphasis circuit shown in Figure 9;

Figure 11 is a block diagram showing the configuration of a further example of the emphasis circuit used in the embodiment shown in Figure 6; and

Figure 12 is a diagram showing the characteristic of the emphasis circuit shown in Figure 11.

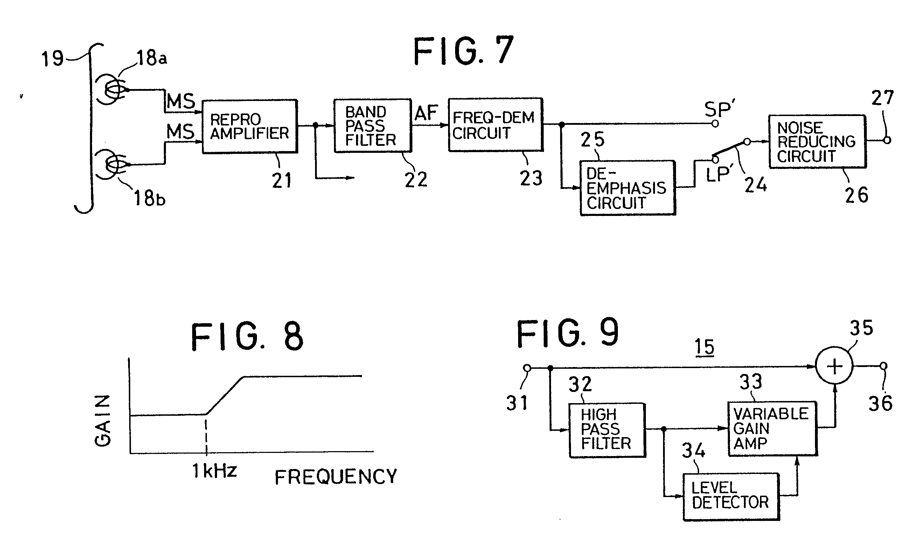

Part of one embodiment of apparatus for recording audio and video signals and according to the present invention is shown in Figure 6 and part of an example of apparatus for reproducing audio and video signals recorded on a magnetic tape by the embodiment shown in Figure 5, which is constituted with a rotary magnetic head device common to the embodiment shown in Figure 6, is shown in Figure 7. These recording and reproducing apparatuses shown in Figures 6 and 7 form a compact VTR used with a magnetic tape having a width of eight millimeters.

Referring to Figure 6, an audio signal is supplied through an audio signal input terminal 11 to a noise reducing circuit 12. The dynamic range of the audio signal is suppressed for noise reduction in the noise reducing circuit 12, and the audio signal with the suppressed dynamic range is supplied to a contact SP of a switch 13 and an emphasis circuit 15. In the emphasis circuit 15, the level of the audio signal derived from the noise reducing circuit 12 is emphasized in a manner as described later, and the audio signal having the emphasized level is supplied to a contact LP of the switch 13.

When the SP recording mode wherein oblique tracks are formed on a magnetic tape with spaces or guard bands between each adjacent two thereof is used, the switch 13 is set to select the contact SP and the audio signal obtained from the noise reducing circuit 12 is supplied through the switch 13 to a frequency-modulating circuit 14. In the frequency-modulating circuit 14, a carrier having a frequency, for example, of 1.5 MHz is frequency-modulated by the audio signal obtained from the noise reducing circuit 12 with a relatively small modulation index, such as a frequency deviation range of, for example, about ±60 kHz, so that an FM audio signal AF is obtained at the output end of the frequency-modulating circuit 14 to be supplied to a mixing circuit 16.

On the other hand, when the LP recording mode wherein oblique tracks are arranged on a magnetic tape to be immediately adjacent to each other without spaces or guard bands between each adjacent two thereof is taken, the switch 13 is set to select the contact LP and the audio signal having the emphasized level obtained from the emphasis circuit 15 is supplied through the switch 13 to the frequency-modulating circuit 14. In this case, in the frequency-modulating circuit 14, the carrier having the frequency, for example, of 1.5 MHz is frequency-modulated by the audio signal having the emphasized level obtained from the emphasis circuit 15 with a relatively large modulation index, which is larger than that set up in the SP recording mode, so that the FM audio signal AF is obtained at the output end of the frequency-modulating circuit 14 to be supplied to the mixing circuit 16.

Meanwhile, a processed colour video signal LC+YF composed of the frequency-converted chrominance signal LC and the FM luminance signal YF is also supplied to the mixing circuit 16 through a video signal terminal 20. As aforementioned, the frequency-converted chrominance signal LC is formed to have the colour sub-carrier frequency of, for example, about 743 kHz, and the FM luminance signal YF is formed to have the frequency deviation range obtained by a frequency-modulation such that the leading edge of the synchronous signal portion of an original luminance signal corresponds to the frequency of, for example, 4.2 MHz, while the white peak (the maximum amplitude) of the original luminance signal corresponds to the frequency of, for example, 5.4 MHz.

In the mixing circuit 16, the FM audio signal AF is mixed with the processed colour video signal LC+YF to be located in a relatively narrow frequency band arranged between the frequency bands of the frequency-converted chrominance signal LC and the FM luminance signal YF, so as to produce a mixed signal MS. The mixed signal MS obtained from the mixing circuit 16 is supplied through a recording amplifier 17 to a pair of rotary magnetic heads 18a and 18b, which have different azimuth angles and are rotated to scan alternately a magnetic tape 19 so as to form on the magnetic tape 19 successive oblique tracks arranged with spaces or guard bands between each adjacent two thereof in the SP recording mode and also to form on the magnetic tape 19 successive oblique tracks arranged to be immediately adjacent to each other in the LP recording mode. The mixed signal MS is recorded in the successive oblique tracks on the magnetic tape 19 by the rotary magnetic heads 18a and 18b.

Next, the reproducing apparatus shown in Figure 7 will be explained.

Referring to Figure 7, the rotary magnetic heads 18a and 18b are provided to be used in common with the embodiment shown in Figure 6, and are arranged to scan alternately the oblique tracks on the magnetic tape 19 to read the mixed signal MS therefrom in such a manner that each of the oblique tracks is traced by one of the rotary magnetic heads 18a and 18b with the azimuth angle corresponding to that of the rotary magnetic head used for forming the obluque track traced.

The mixed signal MS read from the respective oblique trakks on the magnetic tape 19 by each of the rotary magnetic heads 18a and 18b alternately is supplied to a reproducing amplifier circuit 21 and formed into a continuous signal therein. The mixed signal MS derived from the reproducing amplifier circuit 21 is supplied to a band-pass filter 22. The FM audio signal AF is extracted by the band-pass filter 22 and supplied to a frequency-demodulating circuit 23 to be subjected to frequency-demodulation therein. As a result of this frequency-demodulation, a demodulated audio signal is obtained at the output end of the frequency-demodulating circuit 23.

The demodulated audio signal is supplied to a contact SP' of a switch 24 and a de-emphasis circuit 25. At the de-emphasis circuit 25, the level of the demodulated audio signal derived from the frequency-demodulating circuit 23 is de-emphasized in a manner as described later, and the demodulated audio signal having the de-emphasized level is supplied to a contact LP' of the switch 13.

In a first reproduction mode wherein the magnetic tape 19 on which the mixed signal MS is recorded using the SP recording mode in the recording apparatus shown in Figure 6 is scanned by the rotary magnetic heads 18a and 18b, the switch 24 is set to select the contact SP' and the reproduced audio signal obtained from the frequency-demodulating circuit 23 is directly supplied through the switch 24 to a noise reducing circuit 26. On the other hand, in a second reproduction mode wherein the magnetic tape 19 on which the mixed signal MS is recorded using the LP recording mode in the recording apparatus shown in Figure 6 is scanned by the rotary magnetic heads 18a and 18b, the switch 24 is set to select the contact LP' and the reproduced audio signal having the de-emphasized level obtained from the de-emphasis circuit 25 is supplied through the switch 13 to the noise reducing circuit 26.

In the noise reducing circuit 26, the dynamic range of the demodulated audio signal is expanded so as to reduce noise components contained in the demodulated audio signal, and the demodulated audio signal having been subjected to noise reduction in the noise reducing circuit 26 is derived at an audio signal output terminal 27 as a reproduced audio signal.

Further, the mixed signal MS derived from the reproducing amplifier circuit 21 in the form of a continuous signal is also supplied to a video signal processing circuit (not shown in the drawings) in which the frequency-converted chrominance signal LC is frequency-converted again to the original frequency band so as to from a reproduced chrominance signal, and the FM luminance signal YF is frequency-demodulated to produce a reproduced luminance signal.

Now, referring back to Figure 6, the emphasis circuit 15 in the embodiment shown in Figure 6 is arranged, for example, to emphasize uniformly the level of the audio signal derived from the noise reducing circuit 12 regardless of the frequency of the audio signal, so that the level of the whole frequency component of the audio signal is uniformly increased. Accordingly, in the LP recording mode, the modulation index for the frequency-modulation carried out in the frequency-modulating circuit 14 is uniformly increased to be, for example, about 1.5 times as large as that in the SP recording mode, regardless of the frequency of the audio signal which is supplied to the frequency-modulating circuit 14 as a frequency-modulation signal. In connection with such an arrangement for the emphasis circuit 15, the de-emphasis circuit 25 provided in the reproducing apparatus shown in Figure 7 is arranged to de-emphasize uniformly the level of the demodulated audio signal obtained from the frequency-demodulating circuit 23 regardless of the frequency thereof, so that the level of the whole frequency component of the demodulated audio signal is uniformly reduced.

In another embodiment of apparatus according to the present invention, the emphasis circuit 15 is arranged to have a gain-frequency characteristic as shown in Figure 8, so as to emphasize uniformly the level of the frequency component higher than 1 kHz of the audio signal. In such a case, when the LP recording mode is used, the modulation index for the frequency-modulation carried out in the frequency-modulating circuit 14 is uniformly increased to be, for example, about 1.5 times as large as that in the SP recording mode only when the frequency of the audio signal which is supplied to the frequency-modulating circuit 14 is higher than 1 kHz. In connection with such an arrangement for the emphasis circuit 15, the de-emphasis circuit 25 provided in the reproducing apparatus shown in Figure 7 is arranged to de-emphasize uniformly the level of the demodulated audio signal obtained from the frequency-demodulating circuit 23 only when the frequency of the modulated audio signal is higher than 1 kHz.

In a further embodiment of apparatus according to the present invention, the emphasis circuit 15 is arranged to emphasize the level of the frequency component higher than a predetermined frequency of the audio signal in a manner inversely proportional to decrease in level of the frequency component higher than the predetermined frequency of the audio signal. In this case, when the LP recording mode is used, the modulation index for the frequency-modulation carried out in the frequency-modulating circuit 14 is increased in such a manner that the lower level of the audio signal which is supplied to the frequency-modulating circuit 14 is, the larger the modulation index is, only when the frequency of the audio signal is higher than the predetermined frequency.

Figure 9 shows an example of the configuration of the emphasis circuit 15 used in the further embodiment as mentioned above.

In the emphasis circuit 15 shown in Figure 9, the audio signal derived from the noise reducing circuit 12 is supplied through an input terminal 31 to a high-pass filter 32. The frequency component, for example, higher than 1 kHz of the audio signal is extracted by the high-pass filter 32 and supplied to a voltage controlled variable gain amplifier 33 to be amplified thereby. The frequency component higher than 1 kHz extracted by the high-pass filter 32 is also supplied to a level detector 34. In the level detector 34, the level of the frequency component higher than 1 kHz is detected and a detection output voltage varying in proportion to the detected level is produced. The detection output voltage obtained from the level detector 34 is supplied to the gain control terminal of the voltage controlled variable gain amplifier 33 so that the gain of the voltage controlled variable gain amplifier 33 is controlled to vary in inverse proportion to the level of the frequency component higher than 1 kHz. Accordingly, an amplified output of the frequency component higher than 1 kHz, which has the level increased in the manner inversely proportional to decrease in level of the frequency component higher than 1 kHz extracted by the high-pass filter 32, is obtained from the voltage controlled variable gain amplifier 33. This amplified output of the frequency component higher than 1 kHz is added to the audio signal supplied through the input terminal 31 at a mixing circuit 35 to produce an emphasized audio signal, and the emphasized audio signal is supplied through an output terminal 36 to the contact LP of the switch 13.

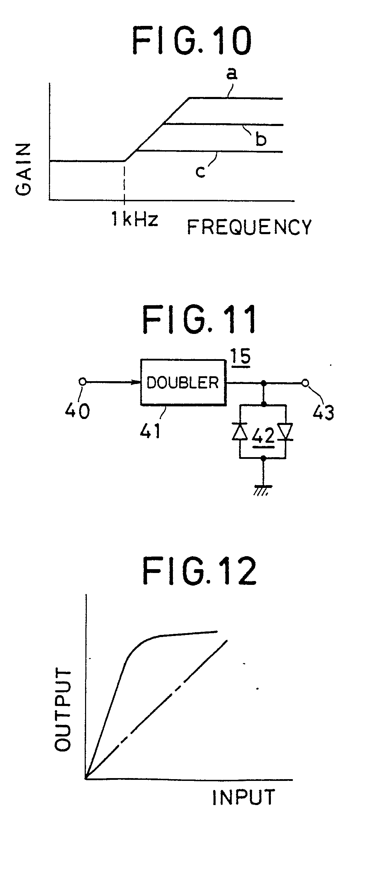

Consequently, the emphasis circuit 15 thus formed has a gain-frequency characteristic as shown in Figure 10, for emphasizing the level of the audio signal. That is, the gain of the emphasis circuit 15 varies in accordance with a curve $a$ in Figure 10 when the level of the frequency component higher than 1 kHz of the audio signal is relatively low, with a curve $b$ in Figure 10 when the level of the frequency component higher than 1 kHz of the audio signal is middle, and with a curve $c$ in Figure 10 when the level of the frequency component higher than 1 kHz of the audio signal is relatively high. In the LP recording mode, the emphasized audio signal obtained from the output terminal 36 of the emphasis circuit 15 shown in Figure 9 is supplied through the switch 13 to the frequency-modulating circuit 14 as a frequency-modulating signal, and therefore the modulation index for the frequency-modulation carried out in the frequency-modulating circuit 14 is increased in such a manner that the lower the level of the audio signal which is supplied to the frequency-modulating circuit 14 is, the larger the modulation index is, only when the frequency of the audio signal is higher than 1 kHz.

In a still further embodiment of apparatus according to the present invention, the emphasis circuit 15 is arranged to emphasize the level of the audio signal when the level of the audio signal is relatively low or intermediate. In this case, when the LP recording mode is used, the modulation index for the frequency-modulation carried out in the frequency-modulating circuit 14 is increased to be, for example, about 1.5 to 2.0 times as large as that in the SP recording mode in the situation wherein the level of the audio signal is relatively low or intermediate, and reduced, compared with modulation index thus increased, in the situation wherein the level of the audio signal is relatively high.

Figure 11 shows an example of the configuration of the emphasis circuit 15 used in the still further embodiment as mentioned above.

In the emphasis circuit 15 shown in Figure 11, the audio signal derived from the noise reducing circuit 12 is supplied through an input terminal 40 to a doubler 41. The level of the audio signal is made double in the doubler 41 and then limited to be equal or lower than a predetermined limiting level by a limiter 42, so that a modified audio signal having the level doubled and limited is obtained at an output terminal 43 so as to be supplied to the contact LP of the switch 13.

With this emphasis circuit 15, an input-output characteristic as indicated by a solid line in Figure 12 is obtained. In Figure 12, a linear input-output characteristic is also shown with a dot-dash line for the purpose of comparison. In the LP recording mode, the modified audio signal, which is modified in its level by the emphasis circuit 15 having the input-output characteristic shown in Figure 12, so as to be derived at the output terminal 43, is supplied through the switch 13 to the frequency-modulating circuit 14 as a frequency-modulating signal, and, as a result, the modulation index for the frequency-modulation carried out in the frequency-modulating circuit 14 is increased to be, for example, about 1.5 to 2.0 times as large as that in the SP recording mode when the level of the audio signal is relatively low or intermediate, and reduced, compared with modulation index thus increased, when the level of the audio signal is relatively high.

With refererence to the embodiment shown in Figure 6, it is possible to position a portion including the emphasis circuit 15 and the switch 13 on the side of the input end of the noise reducing circuit 12. Similarly, with reference to the reproducing apparatus shown in Figure 7, it is possible to position a portion including a de-emphasis circuit 25 and the switch 24 on the side of the output end of the noise reducing circuit 26.

Further, although the level of the audio signal is emphasized in order to increase the modulation index for the frequency-modulation carried out in the frequency-modulating circuit 14 in the embodiment of Figure 6, it is to be understood that the present invention is not limited to such an embodiment, and that the frequency deviation characteristic of the frequency-modulating circuit 14 may be changed so as to increase the modulation index for the frequency-modulation carried out in the frequency-modulating circuit 14 in the LP recording mode, without emphasizing the level of the audio signal. Similarly, in the reproducing apparatus shown in Figure 7, the frequency-demodulation characteristic of the frequency-demodulating circuit 14 may be changed so as to reduce the level of the demodulated audio signal in the reproducing mode wherein a magnetic tape on which the FM audio signal and the processed video signal are recorded through the LP recording mode in the embodiment shown in Figure 6 is scanned by the rotary magnetic heads 18a and 18b, without de-emphasizing the level of the demodulated audio signal.

## Claims

1. An apparatus for recording audio and video signals, the apparatus comprising:

signal processing means (14, 20) for producing a frequency-modulated audio signal obtained by frequency-modulating a predetermined carrier in response to an input audio signal supplied thereto and a processed video signal including a frequency-modulated luminance signal having a frequency band thereof arranged on the upper side of the frequency band of said frequency-modulated audio signal; and

magnetic recording means (16, 17, 18a, 18b) for recording both said frequency-modulated audio signal and said processed video signal in oblique tracks arranged successively on a magnetic tape using an optionally selected one of a first recording mode in which the oblique tracks are formed on the magnetic tape with spaces between each adjacent two thereof and a second recording mode in which the oblique tracks are formed on the magnetic tape to be immediately adjacent to each other; characterized by:

modulation control means (13, 15) for controlling the frequency-modulation carried out by said signal processing means (14, 20) to produce said frequency-modulated audio signal so as that said frequency-modulated audio signal is obtained by frequency-modulation with a first modulation index in said first recording mode and with a second modulation index larger than said first modulation index in said second recording mode.

2. An apparatus according to claim 1 wherein said modulation control means (13, 15) comprises level emphasizing means (15) for emphasizing the level of said input audio signal so as to produce an emphasized audio signal used for frequency-modulation of said predetermined carrier in said second recording mode.

3. An apparatus according to claim 1 wherein said modulation control means (13, 15) comprises frequency responding means for controlling said frequency - modulation performed in said signal processing means (14, 20) so that said frequency - modulated audio signal is obtained through the frequency - modulation with said second modulation index when said predetermined carrier is frequency - modulated in response to a frequency component higher than a predetermined frequency of said input audio signal in said second recording mode.

4. An apparatus according to claim 3 wherein said predetermined frequency is selected to be about 1 kHz.

5. An apparatus according to claim 3 wherein said modulation control means (13, 15) further comprises level responding means operative to vary said second modulation index in such a manner that the lower the level of said frequency component is, the larger said second modulation index is.

6. An apparatus according to claim 5 wherein said modulation control means (13, 15) comprises level emphasizing means (15) for emphasizing the level of said input audio signal by means of increasing the level of said frequency component in response to the original level thereof so as to produce an emphasized audio signal used for frequency - modulation of said predetermined carrier in said second recording mode, said level emphasizing means (15) including said frequency responding means and said level responding means.

7. An apparatus according to claim 6 wherein said level emphasizing means (15) comprises a high-pass filter (32) for extracting said frequency component from said input audio signal, a level detector (34) for detecting the level of said frequency component and producing a detection output varying in response to the detected level therein, a variable gain amplifier (33) for amplifying said frequency component, the gain of said variable gain amplifier (33) being controlled in accordance with said detection output obtained from said level detector (34), and a mixing circuit (35) for mixing an output of said variable gain amplifier (33) with said input audio signal so as to produce said emphasized audio signal.

8. An apparatus according to claim 1 wherein said modulation control means (13, 15) comprises level modifying means (41, 42) for modifying the level of said input audio signal so that, in the situation wherein the level of said input audio signal is relatively high, said second modulation index is reduced as compared with said second modulation index set up in the situation wherein the level of said input audio signal is relatively low.

9. An apparatus according to claim 8 wherein said level modifying means (41, 42) comprises a doubler (41) for doubling the level of said input audio signal and a limiter (42) for limiting an output of said doubler (41) to be less than a predetermined level.

**Patentansprüche**

1. Gerät zur Aufzeichnung von Ton- und Videosignalen, mit Signalverarbeitungsmitteln (14, 20) zum Erzeugen eines frequenzmodulierten Tonsignals, das durch Frequenzmodulation eines vorbestimmten Trägers in Reaktion auf ein Eingangstonsignal gewonnen wird, welches diesen zugeführt wird, und eines verarbeiteten Videosignals, das ein frequenzmoduliertes Leuchtdichtesignal enthält, welches ein Frequenzband desselben hat, das auf der oberen Seite des Frequenzbandes des frequenzmodulierten Tonsignals angeordnet ist, und

magnetischen Aufzeichnungsmitteln (16, 17, 18a, 18b) zur Aufzeichnung sowohl des frequenzmodulierten Tonsignals als auch des verarbeiteten Videosignals in schrägverlaufenden, aufeinanderfolgend auf einem Magnetband angeordneten Spuren unter Benutzung eines beliebig ausgewählten ersten Aufzeichnungsmodus, in welchem die schrägverlaufenden Spuren auf dem Magnetband mit Abständen zwischen jeweils zwei benachbarten der Spuren gebildet werden, und eines beliebig ausgewählten zweiten Aufzeichnungsmodus, in welchem die schrägverlaufenden Spuren derart auf dem Magnetband ausgebildet werden, daß sie unmittelbar aneinandergrenzen, gekennzeichnet durch

Modulationssteuermittel (13, 15) zum Steuern der Frequenzmodulation, die durch die Signalverarbeitungsmittel (14, 20) ausgeführt wird, um das frequenzmodulierte Tonsignal zu erzeugen, so daß das frequenzmodulierte Tonsignal durch Frequenzmodulation mit einem ersten Modulationsindex in dem ersten Aufzeichnungsmodus und mit einem zweiten Modulationsindex, der größer als der erste Modulationsindex ist, in dem zweiten Aufzeichnungsmodus gewonnen wird.

2. Gerät nach Anspruch 1, bei dem die Modulationssteurmittel (13, 15) ein Pegelanhebungsmittel (15) zum Anheben des Pegels des Eingangstonsignals umfassen, um so ein angehobenes Tonsignal zu erzeugen, das für die Frequenzmodulation des vorbestimmten Trägers in dem zweiten Aufzeichnungsmodus benutzt wird.

3. Gerät nach Anspruch 1, bei dem die Modulationssteuermittel (13, 15) ein frequenzempfindliches Mittel zum Steuern der Frequenzmodulation umfassen, die in den Signalverarbeitungsmitteln (14, 20) durchgeführt wird, so däß das frequenzmodulierte Tonsignal in dem zweiten Aufzeichnungsmodus durch die Frequenzmodulation mit dem zweiten Modulationsindex gewonnen wird, wenn der vorbestimmte Träger in Reaktion auf eine Frequenzkomponente frequenzmoduliert ist, die höher als eine vorbestimmte Frequenz des Eingangstonsignals ist.

4. Gerät nach Anspruch 3, bei dem die vorbestimmte Frequenz derart ausgewählt ist, daß sie ungefähr 1 kHz beträgt.

5. Gerät nach Anspruch 3, bei dem die Modulationssteuermittel (13, 15) desweiteren ein pegelempfindliches Mittel umfassen, das betreibbar ist, um den zweiten Modulationsindex in einer Weise zu verändern, daß je niedriger der Pegel der Frequenzkomponente ist, desto größer der zweite Modulationsindex ist.

6. Gerät nach Anspruch 5, bei dem die Modulationssteuermittel (13, 15) ein Pegelanhebungsmittel (15) umfassen zum Anheben des Pegels des Eingangstonsignals mittels Erhöhen des Pegels der Frequenzkomponente in Reaktion auf dessen ursprünglichen Pegel, um so ein angehobenes Tonsignal zu erzeugen, das für die Frequenzmodulation des vorbestimmten Trägers in dem zweiten Aufzeichnungsmodus benutzt wird, wobei das Pegelanhebungsmittel (15) das frequenzempfindliche Mittel und das pegelempfindliche Mittel enthält.

7. Gerät nach Anspruch 6, bei dem das Pegelanhebungsmittel (15) umfaßt:

eine Hochpaßfilter (32) zum Herausfiltern der Frequenzkomponente aus dem Eingangstonsignal,

einen Pegeldetektor (34) zum Erfassen des Pegels der Frequenzkomponente und zum Erzeugen eines Erfassungsausgangssignals, das sich in Reaktion auf den erfaßten Pegel darin verändert,

einen Verstärker (33) mit veränderbarem Verstärkungsfaktor zum Verstärken der Frequenzkomponente, wobei der Verstärkungsfaktor des Verstärkers (33) mit veränderbarem Verstärkungsfaktor in Übereinstimmung mit dem Erfassungsausgangssignals aus dem Pegeldetektor (34) gesteuert ist, und

eine Mischschaltung (35) zum Mischen eines Ausgangssignals des Verstärkers (33) mit veränderbarem Verstärkungsfaktor mit dem Eingangstonsignal, um so das angehobene Tonsignal zu erzeugen.

8. Gerät nach Anspruch 1, bei dem die Modulationssteuermittel (13, 15) Pegeländerungsmittel (41, 42) zum Ändern des Pegels des Eingangstonsignals umfassen, so daß in der Situation, in der der Pegel des Eingangstonsignals relativ hoch ist, der zweite Modulationsindex verglichen mit dem zweiten Modulationsindex verringert ist, der in der Situation eingestellt ist, in der der Pegel des Eingangstonsignals relativ niedrig ist.

9. Gerät nach Anspruch 8, bei dem die Pegeländerungsmittel (41, 42) eine Verdopplerstufe (41) zum Verdoppeln des Pegels des Eingangstonsignals und ein Begrenzerglied (42) zum Begrenzen eines Ausgangssignals der Verdopplerstufe (41) derart, daß er weniger als ein vorbestimmter Pegel beträgt, umfassen.

**Revendications**

1. Appareil permettant d'enregistrer des signaux audio et vidéo, l'appareil comprenant:

un moyen de traitement de signal (14, 20) servant à produire un signal audio modulé en fréquence qui est obtenu par modulation en fréquence d'une porteuse prédéterminée en réponse à un signal audio d'entrée qui lui est fourni et un signal vidéo traité comportant un signal de luminance modulé en fréquence dont la bande de fréquence est disposée sur le côté supérieur de la bande de fréquence dudit signal audio modulé en fréquence; et

un moyen d'enregistrement magnétique (16, 17, 18a, 18b) servant à enregistrer ledit signal audio modulé en fréquence et ledit signal vidéo traité tous deux sur des pistes obliques successivement disposées sur une bande magnétique, suivant l'un, librement choisi, de deux modes, à savoir un premier mode d'enregistrement dans lequel les pistes obliques sont formées sur la bande magnétique de façon qu'il existe des espaces entre deux pistes adjacentes quelconques, et un deuxième mode d'enregistrement dans lequel les pistes obliques sont formées sur la bande magnétique de manière à être immédiatement adjacentes les unes aux autres; caractérisé par:

un moyen de commande de modulation (13, 15) servant à commander la modulation en fréquence effectuée par ledit moyen de traitement de signal (14, 20) afin de produire ledit signal audio modulé en fréquence de façon que ledit signal audio modulé en fréquence soit obtenu par modulation en fréquence à l'aide d'un premier facteur de modulation dans ledit premier mode d'enregistrement et à l'aide d'un deuxième facteur de modulation, plus grand que ledit premier facteur de modulation, dans ledit deuxième mode d'enregistrement.

2. Appareil selon la revendication 1, où ledit moyen de commande de modulation (13, 15) comprend un moyen de préaccentuation de niveau (15) servant à préaccentuer le niveau dudit signal audio d'entrée de manière à produire un signal audio préaccentué qui est utilisé pour la modulation en fréquence de ladite porteuse prédéterminée dans ledit deuxième mode d'enregistrement.

3. Appareil selon la revendication 1, où ledit moyen de commande de modulation (13, 15) comprend un moyen répondant à la fréquence qui sert à commander ladite modulation en fréquence effectuée dans ledit moyen de traitement de signal (14, 20) de façon que ledit signal audio modulé en fréquence soit obtenu par l'intermédiaire de la modulation en fréquence faite à l'aide dudit deuxième facteur de modulation lorsque ladihe porteuse prédéterminée est modulée en fréquence en réponse à une composante de fréquence supérieure à une fréquence prédéterminée dudit signal audio d'entrée dans ledit deuxième mode d'enregistrement.

4. Appareil selon la revendication 3, où ladite fréquence prédéterminée est choisie égale à environ 1 kHz.

5. Appareil selon la revendication 3, où ledit moyen de commande de modulation (13, 15) comprend en outre un moyen répondant au niveau qui a pour fonction de faire varier ledit deuxième facteur de modulation d'une manière telle que ledit deuxième facteur de modulation sera d'autant plus grand que le niveau de ladite composante de fréquence sera bas.

6. Appareil selon la revendication 5, où ledit moyen de commande de modulation (13, 15) comprend un moyen de préaccentuation de niveau (15) servant à préaccentuer le niveau dudit signal audio d'entrée à l'aide d'un moyen qui augmente le niveau de ladite composante de fréquence en réponse au niveau initial de celle-ci de manière à produire un signal audio préaccentué est utilisé pour la modulation en fréquence de ladite porteuse prédéterminée dans ledit deuxième mode d'enregistrement, ledit moyen de préaccentuation de niveau (15) comprenant ledit moyen répondant à la fréquence et ledit moyen répondant au niveau.

7. Appareil selon la revendication 6, où ledit moyen de préaccentuation de niveau (15) comprend un filtre passe-haut (32) servant à extraire ledit composante de fréquence dudit signal audio d'entrée, un détecteur de niveau (34) servant à détecter le niveau de ladite composante de fréquence et à produire un signal de sortie de détection qui varie en réponse au niveau détecté, un amplificateur à gain variable (33) servant à amplifier ladite composante de fréquence, le gain dudit amplificateur à gain variable (33) étant commandé en fonction dudit signal de sortie de détection obtenu de la part dudit détecteur de niveau (34), et un circuit mélangeur (35) servant à mélanger le signal de sortie dudit amplificateur à gain variable (33) avec ledit signal audio d'entrée de manière à produire ledit signal audio préaccentué.

8. Appareil selon la revendication 1, où ledit moyen de commande de modulation (13, 15) comprend un moyen de modification de niveau (41, 42) servant à modifier le niveau dudit signal audio d'entrée de façon que, dans la situation où le niveau dudit signal audio d'entrée est relativement élevé, ledit deuxième facteur de modulation soit réduit par comparaison audit deuxième facteur de modulation qui est fixé pour la situation dans laquelle le niveau dudit signal audio d'entrée est relativement bas.

9. Appareil selon la revendication 8, où ledit moyen de modification de niveau (41, 42) comprend un doubleur (41) servant à doubler le niveau dudit signal audio d'entrée et un limiteur (42) servant à limiter le signal de sortie dudit doubleur (41) de façon que celui-ci soit inférieur à un niveau prédéterminé.

# FIG. 1

# FIG. 2

# FIG. 3

FIG. 4

FIG. 5

FIG. 6

FIG. 4 — LEVEL vs FREQUENCY, curves X, N1, N2

FIG. 5 — LEVEL vs FREQUENCY, curves X, N1, N2

FIG. 6 — block diagram: 11 → NOISE REDUCING CIRCUIT (12) → EMPHASIS CIRCUIT (15), SP/LP (13) → FREQ-MOD CIRCUIT (14) AF → + (16) MS → RECORDING AMPLIFIER (17) → 18a, 18b, 19; LC+YF (20)

EP 0 177 235 B1

FIG. 7

FIG. 8

FIG. 9

EP 0 177 235 B1

# FIG.10

# FIG.11

# FIG.12